# DEMANDE DE BREVET EUROPEEN

(11) **EP 4 292 936 A1**
(43) Date de publication de la demande: **20.12.2023**
(21) Numéro de dépôt: 23179108.8
(22) Date de dépôt: 14.06.2023
(51) Int. Cl.: B64D 13/06

(54) **SYSTÈME DE FLUIDE D'AÉRONEF COMPRENANT UNE VANNE ÉLECTRIQUE DE RÉGULATION ÉQUIPÉE D'UN ACTIONNEUR INTÉGRÉ**

(30) Priorité: 17.06.2022 FR 2205953
(71) Demandeur: Liebherr-Aerospace Toulouse SAS, 31016 Toulouse Cedex 2 (FR)
(72) Inventeur: L'EMEILLAT, Laurent, 31016 TOULOUSE CEDEX 2 (FR); LAFOND, Eric, 31016 TOULOUSE CEDEX 2 (FR)
(74) Mandataire: Bringer IP

(57) **Abrégé**

L'invention concerne un système de fluide d'un aéronef comprenant au moins conduite de circulation d'un fluide, au moins une vanne électrique (30, 40, 50) de régulation du flux de fluide dans ladite conduite de fluide par déplacement d'un organe de régulation dans ladite conduite de fluide, un calculateur central (20) configuré pour pouvoir délivrer des instructions de commande à chaque vanne électrique (30, 40, 50) de régulation en fonction des conditions de vol dudit aéronef, et un circuit électrique (60) d'alimentation dudit calculateur et de chaque vanne de régulation électrique, caractérisé en ce qu'au moins vanne de régulation électrique, dite vanne smart, est équipée d'un actionneur intégré relié au calculateur central et/ou à une autre vanne smart du système de fluide par au moins un bus multiplexé de communication de données (22, 24, 42, 44).

## Description

### Domaine technique de l'invention

L'invention concerne un système de fluide d'un aéronef, tel qu'un système d'air, comprenant au moins une conduite de fluide et au moins une vanne électrique de régulation du flux de fluide dans cette conduite équipée d'un actionneur intégré.

### Arrière-plan technologique

Un aéronef comprend différents types de systèmes de fluide, tel que des systèmes d'air ou des systèmes à cycle vapeur.

Un système d'air comprend en général une pluralité de conduites d'air et une pluralité de vannes de régulation du flux d'air dans les conduites pour véhiculer l'air depuis des sources d'air vers des équipements consommateurs d'air.

A titre d'exemple non limitatif, un tel système d'air est par exemple un système de conditionnement d'air d'une cabine de l'aéronef. Un tel système de conditionnement d'air d'une cabine d'aéronef (aussi désigné par la terminologie de « pack de conditionnement d'air ») comprend en général un dispositif de prélèvement d'un air comprimé, plus connu sous la dénomination d'air bleed, sur au moins un compresseur d'un moteur de l'aéronef (tel que par exemple un moteur propulsif ou un moteur auxiliaire de l'aéronef), une turbomachine à cycle à air, des échangeurs de chaleur, un réseau de conduites comprenant des vannes de régulation du flux d'air, et un calculateur central configuré pour pouvoir commander les ouvertures/fermetures des vannes de régulation en fonction des conditions de vol de l'aéronef.

Le calculateur central du système d'air, connu sous l'acronyme anglais IASC pour « Integrated Air System Controller » est en outre relié à un contrôleur avion pour dialoguer avec ce dernier et recevoir les informations représentatives des conditions de vol de l'aéronef.

Les vannes électriques d'un tel système d'air comprennent en général un organe d'obturation tel qu'un papillon monté sur un axe perpendiculaire au flux d'air circulant dans la conduite d'air dans laquelle il est agencé. Ce papillon est relié mécaniquement à un réducteur mécanique, entrainé par un moteur électrique à balai ou pas à pas. La commande de ce moteur électrique est déportée dans le calculateur central. Pour ce faire, le calculateur IASC comprend une carte électronique de commande pour chaque vanne électrique.

Un système d'air d'un aéronef peut comprendre une dizaine de vannes électriques, ce qui implique de disposer d'une dizaine de cartes électroniques agencées dans le calculateur IASC.

Il est en outre connu que les différents équipements contrôlés par l'IASC (vannes électriques, vannes électropneumatiques, compresseurs, sondes, ventilateurs, etc.) peuvent soit avoir leur propre alimentation électrique (typiquement une alimentation 28V en courant continue ou une alimentation 115 V en courant alternatif), soit être alimentée par l'IASC.

Un tel système nécessite donc un câblage complexe formé de plusieurs fils électriques qui s'étendent entre le calculateur IASC et chaque équipement électrique.

Un tel système n'est donc pas aisément évolutif. En effet, l'ajout d'un équipement ou le déplacement d'un équipement, tel qu'une vanne électrique, impose de modifier le câblage, ce qui peut entrainer une augmentation de la masse du système, une modification des impédances de ligne, un couplage capacitif et inductif entre les différents câbles. L'ajout d'une nouvelle vanne impose en outre d'intégrer une nouvelle carte électronique dans le calculateur IASC.

Les inventeurs ont donc cherché à proposer une nouvelle architecture d'un système de fluide, tel qu'un système d'air, qui permet de pallier au moins certains des inconvénients susmentionnés.

### Objectifs de l'invention

L'invention vise à fournir un système de fluide, tel qu'un système d'air, comprenant au moins une conduite de fluide et au moins une vanne électrique de régulation du flux de fluide dans cette conduite.

L'invention vise également à fournir, dans au moins un mode de réalisation, un tel système qui puisse être évolutif sans nécessiter un recâblage complexe de l'ensemble du système.

L'invention vise aussi à fournir, dans au moins un mode de réalisation, un tel système qui autorise des modifications du système sans modification du calculateur central du système.

L'invention vise aussi à fournir, dans au moins un mode de réalisation, un tel système qui permet de définir des sous-systèmes locaux, qui allègent la charge du calculateur central du système.

L'invention vise aussi à fournir, dans au moins un mode de réalisation, un tel système qui peut être dénué d'un calculateur central.

### Exposé de l'invention

Pour ce faire, l'invention concerne un système de fluide (tel qu'un système d'air ou un système à cycle vapeur) d'un aéronef comprenant au moins conduite de circulation d'un fluide, au moins un équipement électrique de régulation du flux de fluide dans ladite conduite de fluide par déplacement d'un organe de régulation dans ladite conduite de fluide, un calculateur central configuré pour pouvoir délivrer des instructions de commande à chaque équipement électrique de régulation en fonction des conditions de vol dudit aéronef, et un circuit électrique d'alimentation dudit contrôleur central et de chaque équipement électrique de régulation.

Le système de fluide selon l'invention est caractérisé en ce qu'au moins un équipement électrique de régulation, dit vanne smart, est équipé d'un actionneur intégré relié au calculateur central et/ou à une autre vanne smart du système de fluide par au moins un bus multiplexé de communication de données, dit bus numérique, ledit actionneur intégré comprenant :
- une carte électronique de commande équipée d'au moins un port relié à chaque bus numérique,
- un moteur électrique piloté par ladite carte électronique de commande et configuré pour pouvoir déplacer ledit organe de régulation dans ladite conduite de fluide,
- un logiciel embarqué sur ladite carte électronique de commande et configuré pour pouvoir déterminer des instructions de commande du moteur électrique à partir de données reçues sur au moins un port d'entrée de ladite carte, dites données de pilotage.

Un système selon l'invention peut former soit un système d'air (dans le cas où le fluide est de l'air), soit un système à cycle vapeur (dans le cas où le fluide est un fluide diphasique). Dans toute la suite, le système est décrit dans sa version « système d'air ». Cela étant, l'homme du métier comprendra aisément que les enseignements s'appliquent *mutatis mutandis* à un système à cycle vapeur ou à tout système de fluide d'un aéronef comprenant des conduites de fluide et des vannes de régulation du flux de fluide dans ces conduites.

Les équipements électriques de régulation peuvent être de tous types. Il peut s'agir de vannes électriques, de vannes électropneumatiques, de compresseurs, de ventilateurs, etc. Dans toute la suite, on évoque essentiellement des vannes électriques de régulation, étant entendu que l'invention ne se limite pas aux seules vannes électriques de régulation. L'homme du métier comprendra aisément que les enseignements s'appliquent *mutatis mutandis* à un système comprenant d'autres types d'équipements électriques de régulation tels que ceux susmentionnés.

Le système selon l'invention présente notamment la particularité d'avoir déporté le contrôle des moteurs de chaque vanne électrique de régulation directement dans chaque vanne, formant ainsi une vanne smart.

En outre, chaque vanne smart peut être reliée au calculateur central et/ou à une autre vanne smart par au moins un bus numérique, de préférence deux bus numérique unidirectionnel. En d'autres termes et dans le cas de deux bus numériques unidirectionnels, destinés respectivement aux liaisons montantes (les données sont envoyées par le calculateur central et/ou par une autre vanne smart à destination de cette vanne smart) et descentes (les données sont envoyées par cette vanne smart à destination du calculateur central et/ou d'une autre vanne smart), seuls deux fils sont nécessaires entre le calculateur et/ou une vanne smart et cette vanne smart. Il est aussi possible de relier les vannes entre elles et/ou les vannes et le calculateur par deux bus numériques bidirectionnels.

Un bus numérique est de préférence un bus de données faisant référence à la désignation anglaise de Controller Area Network (plus connu sous la dénomination de bus CAN). Ce bus multiplexé permet de raccorder sur un même câble l'ensemble des vannes électriques au calculateur central, limitant ainsi les câblages spécifiques entre le calculateur central et chaque équipement électrique de régulation.

Un système selon l'invention est donc aisément évolutif dans la mesure où il suffit de relier un nouvel équipement électrique de régulation aux bus de communications numériques et à une alimentation électrique pour qu'il puisse être mis en service, sans nécessiter de faire évoluer en parallèle le calculateur central et/ou l'ensemble du câblage du système.

Selon l'invention, la carte électronique reçoit des données de pilotage à partir desquelles des instructions de commande moteur sont élaborées. Les données de pilotage peuvent provenir du calculateur central et sont véhiculées par le bus numérique descendant.

Avantageusement et selon l'invention, au moins une vanne smart est reliée à au moins un capteur analogique de mesure d'une grandeur de fluide véhiculé par la conduite de fluide associée et ladite carte électronique de cette vanne smart comprend au moins un port d'entrée relié à ce capteur analogique de telle sorte que les mesures fournies par ce capteur analogique puissent former des données de pilotage.

Selon cette variante, une vanne smart peut recevoir, à titre de données pilotage, des mesures d'une grandeur du fluide véhiculé par la conduite dont elle contrôle le flux. Ainsi, cet ensemble formé d'une vanne smart et d'un ou plusieurs capteurs analogiques peut former un sous-système de régulation locale, tel qu'un sous-système de régulation de pression, de température ou de débit, en fonction du type de capteur utilisé.

Cette variante permet donc d'alléger la charge du calculateur central du système de fluide en déportant une partie de la régulation au sous-système local ainsi formé. Cela permet donc de réduire la masse globale du système de fluide en limitant les câblages et en réduisant les besoins du calculateur central (une partie de ses fonctionnalités étant alors déportées dans les sous-systèmes locaux ainsi formés).

Avantageusement et selon l'invention, le système comprend au moins deux vannes smart reliées entre elles par un bus numérique, ladite première vanne smart, dite vanne maître, étant configurée pour pouvoir déterminer et transmettre des données de pilotage à ladite deuxième vanne smart, dite vanne esclave.

Selon cette variante avantageuse, l'actionneur de la vanne maître fait office de calculateur central pour la vanne esclave. En d'autres termes et selon cette variante, le calculateur central n'est pas nécessaire et la vanne maître peut remplacer le calculateur central. Les vannes smarts sont reliées entre elles par les bus de données numériques. Un tel système peut être utilisé en lieu et place des systèmes nécessitant peu d'équipements de régulation, comme les systèmes de régulation de température pour hélicoptère.

A noter que les vannes esclaves d'un tel système peuvent également former un sous-système de régulation locale lorsqu'elles sont reliées à un capteur analogique de mesure d'une grandeur de fluide comme décrit précédemment.

Un système de fluide selon l'invention peut être un système d'air d'un aéronef lorsque le fluide est de l'air. Un tel système d'air est par exemple un système de conditionnement d'air d'un aéronef.

Un système de fluide selon l'invention peut également être un système à cycle vapeur lorsque le fluide est un fluide diphasique.

Selon d'autres aspects de l'invention, l'actionneur d'une vanne smart selon l'invention peut comprendre une ou plusieurs des caractéristiques techniques suivantes :
- le moteur électrique est un moteur synchrone comprenant des moyens de recopie de sa position,
- un réducteur relie mécaniquement ledit moteur électrique et ledit organe de régulation,
- la logiciel embarqué sur la carte électronique est configuré pour surveiller la vanne smart et gérer les pannes de l'actionneur,
- le logiciel embarqué est configurable pour conférer à la vanne un rôle de sous-système de régulation locale par des entrées du type « pinprog » prévues sur la carte électronique.

L'invention concerne également un système de fluide caractérisé en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système d'air selon un premier mode de réalisation de l'invention,
[Fig. 2] est une vue schématique d'un système d'air selon un deuxième mode de réalisation de l'invention,
[Fig. 3] est une vue schématique fonctionnelle d'une vanne smart d'un système d'air selon l'invention.

### Description détaillée d'un mode de réalisation de l'invention

Sur les figures, les échelles et les proportions ne sont pas strictement respectées et ce, à des fins d'illustration et de clarté. En outre, les éléments identiques, similaires ou analogues sont désignés par les mêmes références dans toutes les figures.

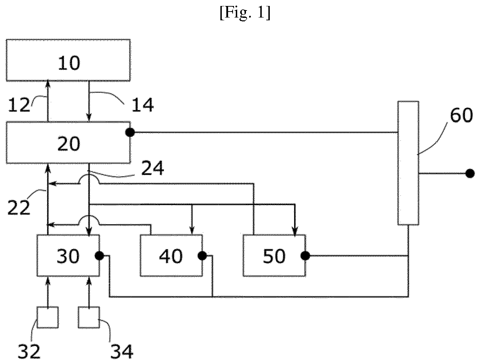

La figure 1 illustre schématiquement un système d'air d'un aéronef comprenant un calculateur central 20 du système d'air relié à un contrôleur avion 10 destiné à lui fournir des informations représentatives des conditions de vol. Le calculateur central 20 est par exemple un calculateur connu sous l'acronyme anglais IASC pour « Integrated Air System Controller ». Le calculateur central 20 peut dialoguer avec le contrôleur avion 10 par les liaisons 12, 14.

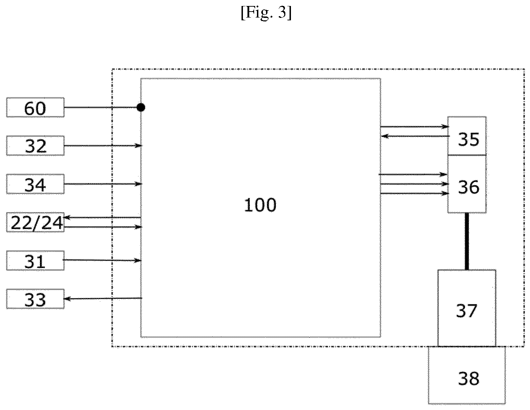

Le système d'air selon le mode de réalisation de la figure 1 comprend en outre trois vannes de régulation, 30, 40, 50 du flux d'air dans des conduites d'air non représentées sur la figure à des fins de clarté. Ces vannes de régulation 30, 40, 50 sont des vannes smart équipées chacune d'un actionneur intégré. La figure 3, décrite ultérieurement, illustre schématiquement une telle vanne smart équipée d'un actionneur intégré. La figure 1 se focalise sur les liaisons entre les différents équipements.

Le calculateur central 20 est relié aux vannes 30, 40, 50 par deux bus de communication de données 22, 24. Le bus de communication de données 24 est le bus de communication, dit descendant, permettant de véhiculer des données de pilotage du calculateur central 20 vers les vannes de régulation. Le bus de communication de données 22 est le bus de communication, dit montant, permettant de véhiculer des données (par exemple la position des vannes ou autres informations disponibles) des vannes 30, 40, 50 vers le calculateur central 20.

Le système selon le mode de réalisation de la figure 1 comprend en outre des capteurs analogiques 32, 34 reliés à la vanne de régulation 30. Ces capteurs 32, 34 sont par exemple des capteurs de pression, de température, etc. de l'air circulant dans la conduite pilotée par cette vanne de régulation 30. L'ensemble formé par la vanne de régulation 30 et les capteurs 32, 34 forment ainsi un sous-système local de régulation. En d'autres termes, la vanne 30 peut s'auto-réguler en fonction des mesures fournies par les capteurs 32, 34.

Enfin, l'ensemble des équipements électriques du système selon l'invention sont alimentés par un circuit électrique 60, qui est par exemple un circuit avion 28 volts.

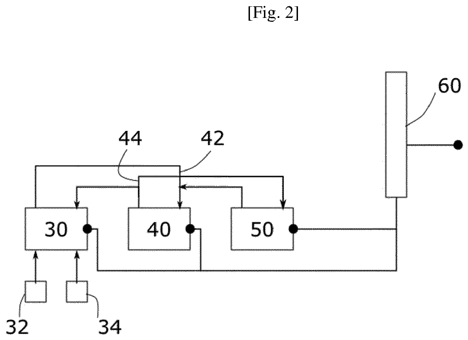

La figure 2 illustre un autre mode de réalisation d'un système d'air selon l'invention dans lequel le calculateur central 20 n'est plus nécessaire.

Ainsi, dans ce mode de réalisation, seules les trois vannes smarts 30, 40, 50 sont présentes. En outre, la vanne 40 est la vanne maître qui fait office de calculateur central et les vannes 30 et 50 sont des vannes esclaves pilotées par la vanne maître 40. Les différentes vannes sont reliées entre elles par des bus de communication numériques 42, 44, qui sont par exemple des bus CAN. Le bus de communication de données 44 est le bus de communication, dit descendant, permettant de véhiculer des données de pilotage de la vanne maître 40 vers les vannes de régulation esclaves 30, 50. Le bus de communication de données 42 est le bus de communication, dit montant, permettant de véhiculer des données des vannes esclaves 30, 50 vers la vanne maître 40.

En outre, et à l'instar du mode de réalisation de la figure 1, la vanne de régulation 30 est reliée à des capteurs analogiques 32, 34 de telle sorte que l'ensemble formé par la vanne de régulation 30 et les capteurs 32, 34 constitue un sous-système local de régulation.

La figure 3 illustre schématiquement une vanne de régulation smart selon un mode de réalisation de l'invention permettant de former les systèmes d'air selon l'invention. La figure 3 illustre plus spécifiquement la vanne de régulation 30. Cela étant, les enseignements techniques s'appliquent *mutatis mutandis* aux vannes de régulation 40 et 50.

La particularité d'une vanne de régulation selon un système selon l'invention est la présence d'un actionneur intégré comprenant *a minima* un moteur électrique, une carte électronique et un logiciel embarqué.

Sur la figure 3, l'actionneur de la vanne smart comprend une carte électronique 100 configurée pour être alimentée en énergie électrique par le circuit électrique 60. La carte est en outre équipée de ports (représentés sur la gauche de la carte électronique 100) permettant à la carte de recevoir les données issues des capteurs analogiques 32, 34, de relier la carte aux bus de communication CAN 22 et 24 (selon le mode de réalisation de la figure 1), de configurer la carte par une entrée 31 du type « pinprog », et de fournir des informations discrètes 33 pouvant être utilisées par le système.

Cette carte 100 est en outre configurée pour piloter les trois phases d'un moteur 36 qui est par exemple un moteur synchrone associé à un moyen de recopie 35 de la position du moteur. Ce moteur 36 est relié mécaniquement à un réducteur 37 qui pilote l'organe de régulation 38 de la vanne 30.

La carte électronique 100 est une carte pilotée par un microprocesseur et comprend par exemple un module de filtrage des signaux d'entrées pour disposer de signaux dont les perturbations sont limitées, un module de contrôle formé par le microprocesseur, des mémoires, et des composants actifs de traitement des signaux numériques et analogiques reçus en entrée de la carte, et un module de puissance permettant de contrôler le moteur électrique.

Le moyen de recopie 35 de la position du moteur électrique 36 comprend par exemple trois capteurs à effet Hall discrets qui forment ainsi un capteur de position du moteur électrique 36. Chaque capteur à effet Hall détecte les variations du champ magnétique qui fait varier sont état d'ouvert à fermé, et inversement, en fonction de la position du rotor du moteur électrique 36. Le module de contrôle de la carte électronique 100 compte le nombre d'activation/désactivation de chaque capteur à effet Hall et en déduit une vitesse.

Cette recopie de la position du moteur permet de réguler la vitesse du moteur électrique 36 en boucle fermée. Cette recopie permet également, en lien avec le facteur de réduction du réducteur 37, de déterminer la position de l'organe de régulation 38 dans la conduite au sein de laquelle la vanne de régulation est agencée.

La carte électronique 100 embarque en outre un logiciel configuré pour fournir les instructions de commande du moteur 36 (illustrées par les trois phases du moteur) en fonction des données de pilotage reçues en entrée de la carte. Ces données de pilotage sont par exemple les données véhiculées par le bus CAN descendant 24 ou les données issues des capteurs analogique 32 et 34.

Ce logiciel peut être de tous types et dépend des logiques de commande visées par le système selon l'invention.

Le logiciel est notamment programmé pour analyser et décoder les données d'entrées issues du bus numérique, des capteurs analogiques et des signaux discrets. Le logiciel est également programmé pour analyser les données de retour de position du moteur électrique, pour analyser les données de courant de chaque phase du moteur et pour analyser les données de tension de chaque phase du moteur électrique.

Le logiciel est également programmé pour surveiller différents paramètres de la carte électronique, tels que la température de la carte, les données de tension de la carte et les données de courant de la carte.

D'une manière générale, le logiciel embarqué sur la carte électronique peut être programmé selon les besoins et les indicateurs de suivi souhaité dans le cadre de l'application visée.

## Revendications

1. Système de fluide d'un aéronef comprenant au moins une conduite de circulation d'un fluide, au moins une vanne électrique (30, 40, 50) de régulation du flux de fluide dans ladite conduite de fluide par déplacement d'un organe de régulation dans ladite conduite de fluide, un calculateur central (20) configuré pour pouvoir délivrer des instructions de commande à chaque vanne électrique (30, 40, 50) de régulation en fonction des conditions de vol dudit aéronef, et un circuit électrique (60) d'alimentation dudit calculateur et de chaque vanne de régulation électrique,
**caractérisé en ce qu'**au moins une vanne de régulation électrique, dite vanne smart, est équipée d'un actionneur intégré relié au calculateur central et/ou à une autre vanne smart du système de fluide par au moins un bus multiplexé de communication de données, dit bus numérique (22, 24, 42, 44), ledit actionneur intégré comprenant:
o une carte électronique (100) de commande équipée d'au moins un port d'entrée relié audit bus numérique,
o un moteur électrique (36) piloté par ladite carte électronique (100) de commande et configuré pour pouvoir déplacer ledit organe de régulation (38) dans ladite conduite de fluide,
o un logiciel embarqué sur ladite carte électronique (100) de commande et configuré pour pouvoir déterminer des instructions de commande du moteur électrique (36) à partir de données reçues sur au moins un port d'entrée de ladite carte, dites données de pilotage.

2. Système selon la revendication 1 **caractérisé en ce qu'**au moins une vanne smart (30) est reliée à au moins un capteur analogique (32, 34) de mesure d'une grandeur de fluide véhiculé par la conduite de fluide associée et **en ce que** ladite carte électronique (100) de cette vanne smart comprend au moins un port d'entrée relié à ce capteur analogique de telle sorte que les mesures fournies par ce capteur analogique puissent former des données de pilotage.

3. Système selon l'une des revendications 1 ou 2, **caractérisé en ce que** ledit moteur électrique (36) dudit actionneur intégré d'au moins une vanne smart est un moteur synchrone comprenant des moyens (35) de recopie de sa position.

4. Système selon l'une des revendications 1 à 3, **caractérisé en ce que** ledit actionneur intégré d'au moins une vanne smart comprend un réducteur (37) reliant mécaniquement ledit moteur électrique (36) et ledit organe de régulation (38).

5. Système selon l'une des revendications 1 à 4, **caractérisé en ce qu'**il comprend au moins deux vannes smart (30, 40, 50) reliées entre elles par le bus numérique (42, 44), ladite première vanne smart, dite vanne maître (40), étant configurée pour pouvoir déterminer et transmettre des données de pilotage à ladite deuxième vanne smart, dite vanne esclave (30, 50).

6. Système selon l'une des revendications 1 à 5, **caractérisé en ce qu'**il comprend deux bus numériques (22, 24 ; 42, 44) reliant le contrôleur aux vannes smart, chaque bus numérique étant un bus unidirectionnel de données de direction opposée à l'autre bus ou un bus bidirectionnel

7. Système selon l'une des revendications 1 à 6, **caractérisé en ce que** ledit fluide est de l'air de sorte à former un système d'air d'un aéronef.

8. Système selon l'une des revendications 1 à 6, **caractérisé en ce que** ledit fluide est un fluide diphasique de sorte à former un système à cycle vapeur.
